# EUROPEAN PATENT APPLICATION

(11) **EP 4 693 687 A1**
(43) Date of publication of application: **11.02.2026**
(21) Application number: 24792059.8
(22) Date of filing: 17.04.2024
(51) Int. Cl.: H01M 50/417, H01M 50/403, H01M 10/0525, D01F 6/32, D04H 1/728, D04H 1/4318

(54) **SEPARATOR OF LITHIUM-ION BATTERY, AND PREPARATION METHOD THEREFOR AND USE THEREOF**

(30) Priority: 17.04.2023 CN 202310413325
(71) Applicant: SVOLT Energy Technology Co., Ltd., Changzhou, Jiangsu 213200 (CN)
(72) Inventor: SHI, Yue, hangzhou, Jiangsu 213200 (CN); WANG, Wenchao, hangzhou, Jiangsu 213200 (CN); HU, Bojian, hangzhou, Jiangsu 213200 (CN); MA, Yong, hangzhou, Jiangsu 213200 (CN); ZHENG, Junhua, hangzhou, Jiangsu 213200 (CN); LI, Yunming, hangzhou, Jiangsu 213200 (CN)
(74) Representative: Michalski Hüttermann & Partner Patentanwälte mbB
(86) International application number: PCT/CN2024/088428
(87) International publication number: WO 2024/217474

(57) **Abstract**

The present application provides a separator of a lithium-ion battery and a preparation method and application thereof, relating to the field of lithium battery technology. Specifically: the separator comprises a modified fluorinated polyolefin polymer, and the polymer is obtained through a polymerization reaction of a fluorinated polyolefin and a modified monomer; and the modified monomer comprises at least one of imidazole and its derivatives, and olefin-substituted pyridine and its derivatives. The modified polymer material used in the separator of the present application contains a fluorinated polyolefin main chain and a functional side chain with a removal function, which is prepared into a film through electrospinning, and has the effect of absorption and removal of hydrofluoric acid. The lithium-ion battery containing the separator has lower dissolution of the transition metal and better cycling performance, and has broad application prospects.

## Description

### Cross-Reference to Related Applications

This application claims priority to Chinese Patent Application No. CN202310413325.1, filed on April 17, 2023, with China National Intellectual Property Administration, entitled "A Separator of Lithium-ion Battery and Preparation Method and Application Thereof", the entire content of which is incorporated herein by reference.

### Technical Field

The present application relates to the field of lithium-ion battery technology, and specifically relates to a separator of the lithium-ion battery and a preparation method and an application thereof.

### Background

A Lithium-ion battery, as an electrochemical energy storage device having a high efficiency, has attracted widespread attention from academia and industry due to its high energy density and low redox potential. To date, the electrolyte of the lithium-ion battery mainly consist of lithium hexafluorophosphate (LiPF₆) and a solvent such as alkyl carbonate; however, lithium hexafluorophosphate is decomposed to produce hydrofluoric acid (HF) and hexafluorophosphate (PF₅⁻) under high temperature or water-containing conditions, which leads to the dissolution of transition metals (such as nickel, cobalt, manganese, etc.) in a cathode material; and the transition metal elements dissolve, migrate in the electrolyte and deposit on a anode of the battery, resulting in severe gas generation and increased internal resistance; furthermore, metal deposition promotes continuous destruction and regeneration of a SET film of the anode, consuming a large amount of active lithium and leading to decreased cycling performance of the battery.

In the prior art, there are various technical means to solve or prevent the adverse consequences caused by the decomposition of lithium hexafluorophosphate. For example, coating or element doping of cathode materials is an effective means to prevent dissolution of transition metal, but this method cannot reduce the impact of hydrofluoric acid on other structures or components of the battery. In addition, using other lithium salts to replace lithium hexafluorophosphate can fundamentally reduce the generation and diffusion of hydrofluoric acid, but there are problems such as poor solubility in solvents and low ionic conductivity. Existing literature has proven that the application of materials having a function of removing hydrofluoric acid can effectively improve the cycling performance of batteries, and the introduction of electrolyte additives with a hydrofluoric acid absorption function is a common approach, but the use of additives may cause adverse consequences such as decreased conductivity of the electrolyte and increased internal resistance of the battery.

### Summary

The first object of the present application is to provide a separator of the lithium-ion battery, which, in view of the potential negative effects of decomposition of the lithium hexafluorophosphate electrolyte, contains groups with a hydrofluoric acid absorption function in its molecular structure, thereby achieving the removal of hydrofluoric acid generated in the electrolyte of the battery, thus reducing dissolution of the transition metal ion and improving cycling stability of the battery.

The second object of the present application is to provide a preparation method for the said separator of the lithium-ion battery, which produces a separator with a small pore size, a high porosity, and a strong affinity with electrolyte through an electrospinning method.

The third object of the present application is to provide an application of the said separator of the lithium-ion battery in the field of lithium batteries.

To achieve the above objects of the present application, the following technical solutions are adopted:
A separator of the lithium-ion battery comprises a modified fluorinated polyolefin polymer, and the polymer is obtained through a polymerization reaction of a fluorinated polyolefin and a modified monomer; and the modified monomer comprises at least one of olefin-substituted imidazole and its derivatives, and olefin-substituted pyridine and its derivatives.

Further, the fluorinated polyolefin comprises at least one of polyvinylidene fluoride or polyvinylidene fluoride-hexafluoropropylene, polyvinyl fluoride, polytetrafluoroethylene, tetrafluoroethylene-hexafluoropropylene copolymer, and tetrafluoroethylene-hexafluoropropylene-perfluoroalkyl vinyl ether.

Further, the number-average molecular weight of the fluorinated polyolefin is 300,000-700,000.

Further, the modified monomer comprises at least one of vinyl imidazole, 2-methyl vinyl imidazole, allyl imidazole, 2-methyl allyl imidazole, 2-vinyl pyridine, 3-vinyl pyridine, 2-methyl vinyl pyridine, allyl pyridine, or 4-vinyl pyridine.

Further, the mass ratio of the fluorinated polyolefin to the modified monomer is (2-5):1.

The method for preparing the separator of the lithium-ion battery comprises the following steps: Step 1 of mixing a solution of a fluorinated polyolefin, a modified monomer, a catalyst and a ligand compound, and heating for a polymerization reaction to obtain a modified fluorinated polyolefin polymer; Step 2 of preparing the separator through electrospinning of the modified fluorinated polyolefin polymer.

Further, in Step 1, a solvent of the solution of fluorinated polyolefin comprises at least one of toluene, o-xylene, chloroform, dichloromethane, carbon tetrachloride, N-methylpyrrolidone, dimethyl sulfoxide, or N,N-dimethylformamide; the catalyst comprises at least one of cuprous chloride, cuprous bromide, ruthenium chloride, ruthenium bromide, or ferrous chloride; the ligand compound comprises at least one of 1,1,4,7,10,10-hexamethyltrimethylenetetramine, tris(N,N-dimethylaminoethyl)amine, or 4,4-dimethyl-2,2-bipyridine, 2,2,2- bipyridine, 4,4-di-tert-butyl-2,2-bipyridine, or 4,4-di(5-nonyl)-2,2-bipyridine;

Further, in Step 1, the mass fraction of the solution of fluorinated polyolefin is 5%-20%; the mass of the catalyst is 0.5%-3% of the mass of the fluorinated polyolefin; the mass ratio of the ligand compound to the catalyst is (4-6): 1.

Further, in Step 1, the temperature for the polymerization reaction is 60°C-120°C, and the time for the polymerization reaction is 24h-72h.

Further, in Step 2, the modified fluorinated polyolefin polymer is thoroughly mixed with a second solvent to obtain a spinning solution for the electrospinning; and the second solvent comprises at least one of toluene, p-xylene, o-xylene, tetrahydrofuran, N-methylpyrrolidone, N,N-dimethylformamide, N,N-dimethylacetamide, dimethyl sulfoxide, dichloromethane, chloroform, carbon tetrachloride, or cyclohexane;

Further, the mass concentration of the modified fluorinated polyolefin polymer in the spinning solution is 2%-10%.

Further, in Step 2, during the electrospinning, the temperature of the spinning solution is 30°C-60°C, and the voltage for the electrospinning is 15kV-30kV.

The application of the separator of the lithium-ion battery in the field of lithium-ion batteries includes, but is not limited to, a lithium-ion battery containing the said separator of the lithium-ion battery, an electrical appliance containing the said separator of the lithium-ion battery, etc.

Further, the application may be a lithium-ion battery, comprising a cathode plate, an anode plate, a separator and an electrolyte; and the active material in the cathode plate comprises at least one of lithium manganese oxide, lithium nickel manganese oxide, lithium manganese iron phosphate, or lithium nickel cobalt manganese oxide, and the material of the anode plate comprises at least one of graphite, silicon-carbon, or silicon-oxygen material.

Compared with the prior art, the beneficial effects of the present application are as follows: the present application provides an electrospun separator with a hydrofluoric acid absorption and removal function, and the preparation method and application thereof, and the polymer used in the separator contains a fluorinated polyolefin main chain and a functional side chain with a removal function; and a lithium-ion battery containing the separator has lower dissolution of the transition metal and better cycling performance.

### Brief Description of the Drawings

In order to more clearly illustrate the technical solutions in the specific embodiments in the present application or prior art, a brief introduction will be given to the drawings that need to be used in the description of specific embodiments or prior art. Obviously, the drawings described below are some embodiments of the present application, and those skilled in the art can obtain other drawings based on these drawings without creative labor.

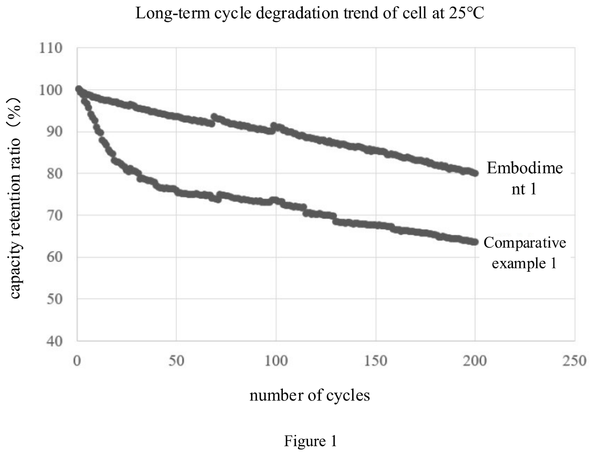

Figure 1 provides a comparison diagram of cycling performance in Test Example 2.

### Detailed Description

The present application is implemented through the following specific embodiments: a separator of the lithium-ion battery comprises a modified fluorinated polyolefin polymer, and the polymer is obtained through a polymerization reaction of a fluorinated polyolefin and a modified monomer; and the modified monomer comprises at least one of imidazole and its derivatives, olefin-substituted pyridine and its derivatives.

It should be noted that "olefin-substituted imidazole and its derivatives" in the present application refers to: imidazole and derivatives of imidazole containing at least one olefin substituent, which may be directly purchased by those skilled in the art as needed, or synthesized by substitution using imidazole and imidazole derivatives as raw materials; similarly, "olefin-substituted pyridine and its derivatives" refers to: pyridine and derivatives of pyridine containing at least one olefin substituent, which may be directly purchased by those skilled in the art as needed, or synthesized by substitution using pyridine and pyridine derivatives as raw materials.

The method for preparing the separator of the lithium-ion battery comprises the following steps: Step 1 of mixing the solution of the fluorinated polyolefin, the modified monomer, a catalyst and a ligand compound, and heating for a polymerization reaction to obtain the modified fluorinated polyolefin polymer; Step 2 of preparing the separator of the lithium-ion battery through electrospinning of the modified fluorinated polyolefin polymer.

As one embodiment, the process of Step 1 specifically includes: 1) mixing the fluorinated polyolefin and a solvent, stirring thoroughly at 30°C-80°C until completely dissolved, then cooling to room temperature to obtain the solution of fluorinated polyolefin;2) thoroughly mixing the solution of fluorinated polyolefin, the modified monomer and the catalyst under an inert environment, then adding the ligand compound for a heating polymerization reaction; 3) purifying the post-reaction mixture to obtain the modified fluorinated polyolefin polymer. As another embodiment, the purification treatment includes: pouring the mixture into methanol, allowing it to settle, then filtering, followed by redissolving the filtered product in an NMP solution; repeating the above steps three times, then settling in methanol, filtering and drying the final filtered product to obtain the modified fluorinated polyolefin polymer.

As one embodiment, the number-average molecular weight of the fluorinated polyolefin includes but is not limited to 30, 35, 40, 45, 50, 55, 60, 65, 70 (in units of ten thousand).

As one embodiment, the mass ratio of the fluorinated polyolefin to the modified monomer includes but is not limited to 2:1, 3:1, 4:1, 5:1.

As one embodiment, the mass fraction of the solution of fluorinated polyolefin (calculated by solute) includes but is not limited to 5%, 6%, 7%, 8%, 9%, 10%, 11%, 12%, 13%, 14%, 15%, 16%, 17%, 18%, 19%, 20%.

As one embodiment, the mass of the catalyst is 0.5%, 1%, 1.5%, 2%, 2.5%, 3% of the mass of the fluorinated polyolefin; as one embodiment, the mass of the catalyst is 1% of the mass of the fluorinated polyolefin.

As one embodiment, the mass ratio of the ligand compound to the catalyst includes but is not limited to 4:1, 4.5:1, 5:1, 5.5:1, 6:1.

As one embodiment, the temperature for the polymerization reaction includes but is not limited to 60, 70, 80, 90, 100, 110, 120 (in units of °C), and the time for the polymerization reaction includes but is not limited to 24, 30, 36, 48, 60, 72 (in units of h).

As one embodiment, during the electrospinning, the temperature of the spinning solution includes but is not limited to 30, 35, 40, 45, 50, 55, 60 (in units of °C), and the voltage for the electrospinning includes but is not limited to 15, 20, 25, 30 (in units of kV).

### Embodiment 1

### (1) Graft modification of PVDF

In a three-necked flask, 5g of PVDF and 50mL of NMP are added and dissolved at 80°C. After the PVDF is completely dissolved, the temperature is cooled to room temperature;2.5g of 1-vinyl imidazole and 0.05g of CuCl are further added to the three-necked flask, argon is introduced into the device and stirring continued for 30min, then 0.25g of 1,1,4,7,10,10-hexamethyltrimethylenetetramine is added, followed by heating to 120°C and reacting for 48h and then terminating the rection;
the reaction solution is settled in methanol, filtered, and dried to obtain the graft product of this embodiment.

### (2) Preparation of the separator by electrospinning

1g of the graft product is dissolved in a 10g of mixed solvent containing tetrahydrofuran, N-methylpyrrolidone and N,N-dimethylacetamide, where the mass ratio of the three solvents was 5:3:2; the mixture is stirred at 45°C for 2h to obtain an spinning solution (that is, a solution for spinning); electrospinning is performed under conditions of a spinning voltage of 20kV, a solution feeding rate of 1.0mL/min, and a receiving distance of 20cm to obtain the separator of this embodiment.

### Embodiment 2

Substantially the same as Embodiment 1, the only difference is that PVDF is replaced with PVDF-HFP, and 1-vinyl imidazole is replaced with 2-methylallylimidazole in step (1).

### Embodiment 3

Substantially the same as Embodiment 1, the only difference is that 2.5g of 1-vinyl imidazole is replaced with 1g of 2-vinyl pyridine in step (1).

### Embodiment 4

Substantially the same as Embodiment 1, the only difference is that NMP is replaced with DMF, and 1,1,4,7,10,10-hexamethyltrimethylenetetramine is replaced with 4,4-dimethyl-2,2-bipyridine in step (1).

### Embodiment 5

Substantially the same as Embodiment 1, the only difference is that the process of "heating to 120°C and reacting for 48h" is replaced with "heating to 60°C and reacting for 72h" in step (1).

### Embodiment 6

Substantially the same as Embodiment 1, the only difference is that the 10g of mixed solvent of tetrahydrofuran, N-methylpyrrolidone and N,N-dimethylacetamide is replaced with N-methylpyrrolidone, dimethyl sulfoxide and cyclohexane in step (2).

### Embodiment 7

Substantially the same as Embodiment 1, the only difference is that the process of "stirring at 45°C for 2h" is replaced with "stirring at 60°C for 1.5h" in step (2).

### Embodiment 8

Substantially the same as Embodiment 1, the only difference is that the spinning voltage of 20kV is replaced with 30kV in step (2).

### Comparative Example

1g of PVDF is dissolved in a 10g of a mixed solvent of tetrahydrofuran, N-methylpyrrolidone and N,N-dimethylacetamide, where the mass ratio of the three solvents is 5:3:2, the mixture is stirred at 45°C for 2h to obtain an electrospinning solution; electrospinning is performed under conditions of a spinning voltage of 20kV, a solution feeding rate of 1.0mL/min, and a receiving distance of 20cm to obtain a PVDF separator.

### Test Example 1

The separator from each of embodiments and comparative examples is placed in a sample bottle containing 30ml of a 1mol/L LiPF₆/EC electrolyte, with an initial acidity of 353ppm.Three samples of the separator from each embodiment (comparative example) are taken and tested independently three times. After storing the sample bottles at 45°C for 7 days, the acidity of each electrolyte is tested, with results shown in Table 1. Compared with the comparative example, the separator system obtained according to this embodiment can remove HF generated in the electrolyte.

**Table 1**

| | Initial acidity of the electrolyte (ppm) | Acidity of the electrolyte after 7 days (ppm) |
|---|---|---|
| Embodiment 1 | 353 | 113 |
| | | 87 |
| | | 128 |
| Embodiment 2 | | 167 |
| | | 146 |
| | | 161 |
| Embodiment 3 | | 142 |
| | | 131 |
| | | 139 |
| Embodiment 4 | | 98 |
| | | 121 |
| | | 107 |
| Embodiment 5 | | 183 |
| | | 174 |
| | | 187 |
| Embodiment 6 | | 117 |
| | | 106 |
| | | 113 |
| Embodiment 7 | | 103 |
| | | 109 |
| | | 117 |
| Embodiment 8 | | 89 |
| | | 127 |
| | | 104 |
| comparative example | | 229 |
| | | 198 |
| | | 216 |

### Test Example 2

A battery cell is assembled respectively using the separator from each of Embodiment 1 and the comparative example. The composition ratio for the cathode is nickel manganese lithium oxide:PVDF:SP=96:2:2; the composition ratio for the anode is graphite:SP:CMC:SBR=96.5:1.5:1.5:1.5; the electrolyte is a 1mol/L LiPF₆ solution with an EC+EMC solvent (volume ratio of 3:7).

Cycling tests are performed on the two assembled battery cells, with the specific testing method being: a charge-discharge cycling test of 0.5C/1C is conducted in a chamber at a constant temperature of 25°C, with a voltage range of 3.5-5V. The comparison of cycling data obtained is shown in Figure 1.

Meanwhile, ICP tests are performed on the anode plates and separators of the two assembled battery cells, with the specific testing method being: the two battery cells are soaked in aqua regia, diluted, and then tested for the content of the element, with the test data shown in Table 2.

From Figure 1 and Table 2, it can be seen that: compared with the ungrafted separator system of the comparative example, the cells with the grafted separator system of this embodiment have better cycling performance and lower dissolution of the transition metal, and thus have excellent technical effects.

**Table 2**

| Content of dissolved elements | Comparative example 1 | | Embodiment 1 | |
|---|---|---|---|---|
| | Cathode plate | Separator | Cathode plate | Separator |
| Mn(µg/g) | 586 | 349 | 394 | 218 |
| Ni(µg/g) | 203 | 120 | 167 | 105 |

### Industrial Applicability

The present application provides a separator of a lithium-ion battery which, in view of the potential negative effects of decomposition of the lithium hexafluorophosphate electrolyte, contains groups with a hydrofluoric acid absorption function in its molecular structure, thereby achieving the removal of hydrofluoric acid generated in the electrolyte of the battery, thus reducing dissolution of the transition metal ion and improving battery cycling stability.

## Claims

1. A separator of a lithium-ion battery, **characterized in that**, the separator comprises a modified fluorinated polyolefin polymer, and the modified fluorinated polyolefin polymer is obtained through a polymerization reaction of a fluorinated polyolefin and a modified monomer;
wherein the modified monomer comprises at least one of olefin-substituted imidazole and its derivatives, and olefin-substituted pyridine and its derivatives.

2. The separator of the lithium-ion battery according to claim 1, **characterized in that**, the fluorinated polyolefin comprises at least one of polyvinylidene fluoride, polyvinylidene fluoride-hexafluoropropylene, polyvinyl fluoride, polytetrafluoroethylene, tetrafluoroethylene-hexafluoropropylene copolymer, and tetrafluoroethylene-hexafluoropropylene-perfluoroalkyl vinyl ether.

3. The separator of the lithium-ion battery according to claim 2, **characterized in that**, a number-average molecular weight of the fluorinated polyolefin is 300,000-700,000.

4. The separator of the lithium-ion battery according to claim 1, **characterized in that**, the modified monomer comprises at least one of vinyl imidazole, 2-methyl vinyl imidazole, allyl imidazole, 2-methyl allyl imidazole, 2-vinyl pyridine, 3-vinyl pyridine, 2-methyl vinyl pyridine, allyl pyridine, or 4-vinyl pyridine.

5. The separator of the lithium-ion battery according to claim 1, **characterized in that**, a mass ratio of the fluorinated polyolefin to the modified monomer is (2-5):1.

6. A method for preparing the separator of the lithium-ion battery according to any one of claims 1-5, **characterized by**, comprising following steps:
Step 1 of mixing a solution of the fluorinated polyolefin, the modified monomer, a catalyst and a ligand compound, and heating for a polymerization reaction to obtain the modified fluorinated polyolefin polymer; and
Step 2 of preparing the separator through electrospinning of the modified fluorinated polyolefin polymer.

7. The method for preparing the separator of the lithium-ion battery according to claim 6, **characterized in that**, in Step 1, a solvent of the solution of the fluorinated polyolefin comprises at least one of toluene, o-xylene, chloroform, dichloromethane, carbon tetrachloride, N-methylpyrrolidone, dimethyl sulfoxide, or N,N-dimethylformamide;
the catalyst comprises at least one of cuprous chloride, cuprous bromide, ruthenium chloride, ruthenium bromide, or ferrous chloride; and
the ligand compound comprises at least one of 1,1,4,7,10,10-hexamethyltrimethylenetetramine, tris(N,N-dimethylaminoethyl)amine, or 4,4-dimethyl-2,2-bipyridine, 2,2,2- bipyridine , 4,4-di-tert-butyl-2,2-bipyridine, or 4,4-di(5-nonyl)-2,2-bipyridine.

8. The method for preparing the separator of the lithium-ion battery according to claim 7, **characterized in that**, a mass fraction of the solution of the fluorinated polyolefin is 5%-20%.

9. The method for preparing the separator of the lithium-ion battery according to claim 7, **characterized in that**, a mass of the catalyst is 0.5%-3% of a mass of fluorinated polyolefin.

10. The method for preparing the separator of the lithium-ion battery according to claim 7, **characterized in that**, a mass ratio of the ligand compound to the catalyst is (4-6):1.

11. The method for preparing the separator of the lithium-ion battery according to claim 6, **characterized in that**, in Step 1, a temperature for the polymerization reaction is 60°C-120°C, and a time for the polymerization reaction is 24h-72h.

12. The method for preparing the separator of the lithium-ion battery according to claim 6, **characterized in that**, in Step 2, the modified fluorinated polyolefin polymer is thoroughly mixed with a second solvent to obtain a spinning solution for the electrospinning;
wherein the second solvent comprises at least one of toluene, p-xylene, o-xylene, tetrahydrofuran, N-methylpyrrolidone, N,N-dimethylformamide, N,N-dimethylacetamide, dimethyl sulfoxide, dichloromethane, chloroform, carbon tetrachloride, or cyclohexane.

13. The method for preparing the separator of the lithium-ion battery according to claim 12, **characterized in that**, a mass concentration of the modified fluorinated polyolefin polymer in the spinning solution is 2%-10%.

14. The method for preparing the separator of the lithium-ion battery according to claim 12, **characterized in that**, in Step 2, during the electrospinning, a temperature of the spinning solution is 30°C-60°C, and a voltage for the electrospinning is 15kV-30kV.

15. An application of the separator of the lithium-ion battery according to any one of claims 1-5 in a field of lithium-ion batteries.
